# EUROPÄISCHE PATENTSCHRIFT

(11) **EP 1 047 629 B1**
(45) Veröffentlichungstag und Bekanntmachung des Hinweises auf die Patenterteilung: **12.06.2002**
(21) Anmeldenummer: 98965286.2
(22) Anmeldetag: 19.12.1998
(51) Int. Cl.: C01B 3/32, B01J 37/18, B01J 37/14

(54) **VERFAHREN ZUR VORBEHANDLUNG EINES KATALYSATORMATERIALS**
METHOD FOR PRETREATING A CATALYST MATERIAL
PROCEDE PERMETTANT LE TRAITEMENT PREALABLE D'UN MATERIAU CATALYSEUR

(30) Priorität: 16.01.1998 DE 19801373
(43) Veröffentlichungstag der Anmeldung: 02.11.2000
(73) Patentinhaber: BASF AKTIENGESELLSCHAFT, 67056 Ludwigshafen (DE); XCELLSIS AG, 73230 Kirchheim / Teck-Nabern (DE)
(72) Erfinder: AUTENRIETH, Rainer, D-89155 Erbach (DE); BRAUCHLE, Stefan, D-88400 Biberach/Riss (DE); KUMBERGER, Otto, D-68163 Mannheim (DE)
(74) Vertreter: Kocher, Klaus-Peter, Dipl.-Phys.
(86) Internationale Anmeldenummer: EP9808338
(87) Internationale Veröffentlichungsnummer: WO9936350

(56) Entgegenhaltungen:
- EP-A- 0 192 289
- EP-A- 0 601 957
- US-A- 4 822 824
- PATENT ABSTRACTS OF JAPAN vol. 097, no. 007, 31. Juli 1997 & JP 09 075734 A (MITSUBISHI GAS CHEM CO INC), 25. März 1997
- PATENT ABSTRACTS OF JAPAN vol. 013, no. 151 (C-584), 12. April 1989 & JP 63 310703 A (FUJI ELECTRIC CO LTD), 19. Dezember 1988 in der Anmeldung erwähnt
- PATENT ABSTRACTS OF JAPAN vol. 007, no. 091 (C-162), 15. April 1983 & JP 58 017836 A (FUJI DENKI SEIZO KK;OTHERS: 01), 2. Februar 1983

## Beschreibung

Die Erfindung bezieht sich auf ein Verfahren zur Vorbehandlung eines Katalysatormaterials für die Katalysierung einer chemischen Reaktion in einem entsprechenden Reaktor, beispielsweise eines Reformierungskatalysatormaterials für die Katalysierung einer Methanolreformierungsreaktion zur Wasserstoffgewinnung in einem brennstoffzellenbetriebenen Kraftfahrzeug.

Eine bekannte Tatsache bei den meisten gängigen Reformierungskatalysatormaterialien, speziell bei solchen auf der Basis von Cu und/oder Zn, besteht darin, daß sie sowohl während ihrer anfänglichen Formierung als auch während der ersten Betriebsstunden im anschließenden Reformierungsreaktionsbetrieb eine merkliche Volumen- und Massenabnahme erfahren. Wenn folglich das Katalysatormaterial ohne Vorbehandlung in den Reformierungsreaktor eingebracht und dort formiert, d.h. in seiner katalytischen Wirkung aktiviert wird, um anschließend zur Katalysierung der Reformierungsreaktion zur Verfügung zu stehen, führt die Volumen- und Massenabnahme dazu, daß das Reaktorvolumen vom Katalysatormaterial im Reformierungsreaktionsbetrieb nicht mehr ganz ausgenutzt wird. Es tritt eine entsprechende Abnahme der spezifischen Aktivität des Katalysatormaterials und damit der Leistungsfähigkeit des Reformierungsreaktors auf. Durch diesen Effekt verringert sich die tatsächliche Umsatzleistung des Reaktors gegenüber seiner von der Auslegung her an sich möglichen Umsatzleistung. Eine weitere Schwierigkeit dieses Phänomens ergibt sich speziell bei Reformierungsreaktoren mit Wärmeübertragerstruktur. Bei solchen, z.B. zur Wasserdampfreformierung von Methanol in brennstoffzellenbetriebenen Kraftfahrzeugen eingesetzten Reaktoren sind von zwei in Wärmeübertragungsverbindung stehenden Reaktionsräumen ein erster Reaktionsraum mit einem Reformierungskatalysatormaterial versehen, während der zweite Reaktionsraum als Heizraum dient, in welchem Wärme z.B. durch einen Verbrennungsprozeß bereitgestellt wird. Wenn nun im ersten Reaktionsraum ein Volumenschwund des Reformierungskatalysatormaterials auftritt, findet insoweit keine endotherme Reformierungsreaktion mehr statt, so daß sich die Wärmeabführung aus dem zweiten Reaktionsraum verringert. Als Folge davon können Überhitzungseffekte auftreten, die zur Beschädigung oder gar zum Ausfall des Reaktors führen können.

In der deutschen Patentanmeldung Nr. 197 25 006.8 wird ein Verfahren zur Behandlung eines zur Katalysierung einer Methanolreformierungsreaktion geeigneten Reformierungskatalysatormaterials beschrieben, bei dem dieses vor dem Einbringen in den Reformierungsreaktor dadurch vorgealtert wird, daß es in einer Methanol-Wasser-Atmosphäre bei Temperaturen zwischen etwa 240°C und etwa 350°C und einer Belastung zwischen etwa 0,5m³H₂/h und etwa 50m³H₂/h pro Liter Katalysatormaterial behandelt wird.

In der deutschen Patentanmeldung Nr. 197 25 009.2 ist ein Verfahren zur Vorbehandlung eines Reformierungskatalysatormaterials für die Katalysierung einer Methanolreformierungsreaktion beschrieben, bei dem dieses vor dem Einbringen in den Reformierungsreaktor dadurch vorgealtert wird, daß es in trockener Atmosphäre ausgeheizt wird. Wenn das Katalysatormaterial in unreduzierter Form vorliegt, kann das Ausheizen z.B. an Luft erfolgen. Wenn es hingegen durch vorheriges Anwenden einer Reduktionsreaktion in reduzierter Form vorliegt, erfolgt das Ausheizen in in inerter Atmosphäre, z.B. einer Stickstoff- oder Argonatmosphäre. Das Ausheizen erfolgt typischerweise über mehrere Stunden hinweg bei Temperaturen in der Größenordnung von 300°C und mehr.

In der Offenlegungsschrift EP 0 192 289 A2 ist ein Verfahren zur Vorbehandlung eines kristallinen Silikat-Katalysatormaterials nach dessen Herstellung und vor dessen Verwendung als katalytisch aktive Substanz beschrieben, wobei das Vorbehandlungsverfahren aus einer Zweischritt-Redoxbehandlung besteht, bei der das Katalysatormaterial in einem ersten Schritt für wenigstens 15 Minuten einem wasserstoffhaltigen reduzierenden Gas bei einer Temperatur zwischen 350°C und 700°C und in einem zweiten Schritt für wenigstens 15 Minuten einem sauerstoffhaltigen, oxidierenden Gas bei einer Temperatur zwischen 350°C und 700°C ausgesetzt wird. Vorzugsweise wird der Redoxbehandlungszyklus im Fall eines SiO₂/Ga₂O₃-Katalysatormaterials nicht mehr als drei Mal durchgeführt, wenn das Molverhältnis im kristallinen Silikat mindestens 110 beträgt, sowie zwischen drei und zehn Mal, wenn das Molverhältnis zwischen 110 und 130 liegt, während bei Molverhältnissen zwischen 130 und 220 das Silikat zuvor einer Calzinierungsbehandlung bei einer Temperatur zwischen 600°C und 1000°C unterworfen und danach der Redoxbehandlungszyklus zwischen drei und zehn Mal ausgeführt wird. Die reduzierende Behandlung erfolgt vorzugsweise mit einem Wasserstoffgehalt des reduzierenden Gases von mindestens 20 Vol.-%, die oxidierende Behandlung erfolgt vorzugsweise mit einer Sauerstoffkonzentration von wenigstens 5 Vol.-%.

Bei einem in der Offenlegungsschrift JP 63-310703(A) offenbarten Methanolreformierungsreaktor sind Maßnahmen getroffen, um trotz des anfänglichen Volumen- und Massenschwunds einer eingebrachten Katalysatorschüttung eine dichte Packung der Schüttung aufrechtzuerhalten. Dazu wird das Katalysatormaterial nach Einbringen in den Reformierungsreaktor und vor Beginn des Reformierungsreaktionsbetriebs einer notwendigen Reduktionsreaktion unterzogen, die zur Volumenabnahme des Katalysatormaterials führt. Eine druckfederbelastete, bewegliche Deckplatte hält das Katalysatormaterial als dichtgepackte Schüttung zusammengedrückt.

Der Erfindung liegt als technisches Problem die Bereitstellung eines Verfahrens zur Vorbehandlung eines Katalysatormaterials derart zugrunde, daß durch Verwendung des so vorgehandelten Katalysatormaterials in einem entsprechenden Reaktor auch in den ersten Betriebsstunden des Reaktionsbetriebs keine merkliche Abnahme der Reaktorumsatzleistung auftritt und im Fall des oben genannten Reaktors mit Wärmeübertragerstruktur schädliche Überhitzungseffekte vermieden werden.

Die Erfindung löst dieses Problem durch die Bereitstellung eines Verfahrens mit den Merkmalen des Anspruchs 1. Bei diesem Verfahren wird das Katalysatormaterial vor dem Einbringen in den Reaktor dadurch vorbehandelt, daß es mehrmals zuerst in einem Formierungsschritt einem wasserstoffhaltigen Formiergas und dann in einem anschließenden Deaktivierungsschritt einem sauerstoffhaltigen Deaktiviergas ausgesetzt wird. Durch dieses Verfahren mit mehrmals ausgeführtem Zyklus von Formierungsschritt und anschließendem Deaktivierungsschritt tritt der allergrößte Teil eines eventuellen Volumen- und/oder Massenschwunds des Katalysatormaterials bereits in der Vorbehandlungsphase auf. Das so vorbehandelte Katalysatormaterial zeigt dann nach Einbringen in den Reaktor auch schon in den ersten Betriebsstunden des Reaktorbetriebs keine merkliche Volumen- und Massenabnahme mehr. Der Reaktionsraum des Reaktors bleibt somit über die gesamte Reaktorbetriebsdauer hinweg weitestgehend vollständig ausgenutzt, so daß der Reaktor keine signifikante Abnahme in seiner Leistungsfähigkeit zeigt. Ein Auffüllen von Katalysatormaterial während des Reaktorbetriebs ist daher meist nicht notwendig. Da der Reaktionsraum des Reaktors vollständig vom Katalysatormaterial ausgenutzt bleibt, besteht bei einem Reaktor mit Wärmeübertragerstruktur keine Gefahr einer Überhitzung des Heizbereichs aufgrund reduzierten Wärmebedarfs einer endothermen Reaktion. Da das erfindungsgemäß vorbehandelte Katalysatormaterial im anschließenden Reaktorbetrieb keine merkliche Volumenschrumpfung mehr zeigt, besteht zudem in dem Fall, daß das Katalysatormaterial als Katalysatorschicht in den Reaktor eingebracht wird, keine Gefahr, daß diese Katalysatorschicht aufgrund von Schrumpfungserscheinungen abplatzt.

Bei einem nach Anspruch 2 weitergebildeten Verfahren wird im Formierungsschritt ein Inertgas/Wasserstoff-Gemisch mit einem Wasserstoffanteil von höchstens etwa 10% als Formiergas verwendet.

Bei einem nach Anspruch 3 weitergebildeten Verfahren wird im Deaktivierungsschritt ein Inertgas/Sauerstoff-Gemisch mit einem Sauerstoffanteil von höchstens etwa 10% als Deaktiviergas verwendet.

Bezüglich der Prozeßtemperaturen zeigt sich, daß beispielsweise eine Temperatur zwischen etwa 100°C und etwa 500°C für den Formierungsschritt, wie im Anspruch 4 angegeben, und für den Dekativierungsschritt eine Temperatur zwischen etwa 0°C und etwa 500°C, wie im Anspruch 5 angegeben, günstig ist.

Als eine beispielhafte Ausführungsform der Erfindung sei stellvertretend für zahlreiche weitere mögliche Realisierungen der Erfindung ein herkömmliches Cu/ZnO/Al₂O₃-Katalysatormaterial zur Katalysierung einer Methanolreformierung betrachtet, bei dem das Cu/ZnO-Material den katalytisch aktiven Bestandteil bildet. Ein solches Material ist z.B. zur Wasserdampfreformierung von Methanol geeignet, wie sie in brennstoffzellenbetriebenen Kraftfahrzeugen eingesetzt wird, um den für die Brennstoffzellen benötigten Wasserstoff aus flüssig mitgeführtem Methanol zu gewinnen. Das Katalysatormaterial wird meist in Form von Pellets bereitgestellt und als Schüttung in den Reformierungsreaktionsraum des Reaktors eingebracht. Um zu verhindern, daß die Leistungsfähigkeit des Reaktors, d.h. dessen Reformierungsreaktionsumsatz, in den ersten Stunden des Reformierungsreaktionsbetriebs merklich abnimmt, wird das Katalysatormaterial vor dem Einbringen in den Reaktionsraum des Reaktors der folgenden Vorbehandlung unterzogen.

Die Vorbehandlung besteht aus mehreren Zyklen von jeweils zwei Schritten, nämlich einem Formierungsschritt und einem anschließenden Deaktivierungsschritt. Im Formierungsschritt wird das Katalysatormaterial einem Inertgas/Wasserstoff-Gemisch bei einer Temperatur zwischen etwa 100°C und etwa 500°C ausgesetzt, wobei der als das Formiergas wirkende Wasserstoff im Gasgemisch mit einem Anteil von bis zu etwa 10% enthalten ist. Nach der so erfolgten Formierung wird das Katalysatormaterial im Deaktivierungsschritt einem Inertgas/Sauerstoff-Gemisch bei einer Temperatur zwischen etwa 0°C und etwa 500°C ausgesetzt, wobei der als Deaktiviergas fungierende Sauerstoff in einem Anteil von bis zu etwa 10% im Gasgemisch enthalten ist. Der Vorbehandlungszyklus aus Formierungsschritt und anschließendem Deaktivierungsschritt wird einmal oder mehrmals wiederholt, bis keine nennenswerte Volumen- und Massenreduktion des Katalysatormaterials mehr auftritt. Es zeigt sich, daß durch diese Vorbehandlung der Volumen- und Massenschwund des Katalysatormaterials vor Einbringen desselben in den Reformierungsreaktor zum allergrößten Teil vorweggenommen werden kann.

Nach Einbringen des auf diese Weise vorbehandelten bzw. vorgealterten Katalysatormaterials in einen entsprechenden Methanolreformierungsreaktor zeigt dieses somit im anschließenden Reformierungsreaktionsbetrieb keinen nennenswerten Volumen- und Massenschwund mehr. Der Reaktionsraum des Reaktors wird dadurch über eine lange Reaktorbetriebsdauer hinweg vollständig vom Katalysatormaterial ausgenutzt, ohne daß Katalysatormaterial nachgefüllt werden muß. Außerdem eignet sich das dergestalt vorbehandelte Katalysatormaterial auch gut zum Aufbringen als Schicht, beispielsweise an einer Reaktionsraumwandung des Reaktors. Denn durch die Vorbehandlung des Katalysatormaterials zeigt die aufgebrachte Katalysatorschicht im anschließenden Reformierungsrektionsbetrieb keine nennenswerte Volumenschrumpfung mehr und neigt daher nicht zum Abplatzen, wie dies bei nicht so vorbehandeltem Katalysatormaterial auftreten kann.

Vorteilhaft ist die Verwendung des erfindungsgemäß vorbehandelten Katalysatormaterials besonders auch in Reformierungsreaktoren, in denen eine endotherme Reformierungsreaktion abläuft und die einen Wärmeübertrageraufbau besitzen, bei dem der Reformierungsreaktionsraum mit einem Heizraum in Wärmekontakt steht, der Wärme beispielsweise mittels eines Verbrennungsprozesses bereitstellt und dazu geeignet ausgelegt ist, indem er z.B. eine entsprechende katalytische Schicht oder Schüttung und/oder Struktur aufweist. Denn dadurch, daß das vorgealterte Reformierungskatalysatormaterial bei beginnendem Reformierungsreaktionsbetrieb keinen merklichen Volumenschwund mehr zeigt, entsteht im Reaktionsraum auch kein Bereich, in dem keine endotherme katalytische Reformierungsreaktion mehr stattfinden kann. Die im Heizraum bereitgestellte Wärme wird somit über eine lange Reaktorbetriebsdauer hinweg im ganzen Reformierungsreaktionsraum für die endotherme Reformierungsreaktion genutzt, ohne daß Bereiche entstehen, in denen die vom Heizraum bereitgestellte Wärme nicht mehr abgeführt würde und zu Erhitzungserscheinungen führen könnte. Beschädigungen oder gar ein Ausfall des Reaktors aufgrund einer solchen Überhitzung sind folglich bei Verwendung des erfindungsgemäß vorbehandelten Katalysatormaterials nicht zu befürchten.

Die Erfindung ist nicht nur für das beschriebene Methanolreformierungskatalysatormaterial, sondern für alle Arten von Katalysatormaterialien nutzbringend einsetzbar, welche zu Beginn des Reaktionsbetriebs einen Volumen- oder Massenschwund zeigen, der durch mehrere Vorbehandlungszyklen, bestehend aus Formierungsschritt und anschließendem Deaktivierungsschritt, weitestgehend vorweggenommen werden kann, bevor das Katalysatormaterial in den entsprechenden Reaktor eingebracht wird. Insbesondere ist die Erfindung für verschiedene Reformierungskatalysatormaterialien in der chemischen Industrie verwendbar.

## Patentansprüche

1. Verfahren zur Vorbehandlung eines bei anfänglicher Benutzung einer Volumenschrumpfung unterliegenden Katalysatormaterials für die Katalysierung einer chemischen Reaktion, insbesondere einer Methanolreformierungsreaktion, in einem entsprechenden Reaktor,
**dadurch gekennzeichnet, daß**
das Katalysatormaterial vor dem Einbringen in den Reaktor mehrmals einem Behandlungszyklus aus einem Formierungsschritt, in welchem es einem wasserstoffhaltigen Formiergasgemisch ausgesetzt wird, und einem anschließenden Deaktivierungsschritt, in welchem es einem sauerstoffhaltigen Deaktiviergasgemisch ausgesetzt wird, so lange unterworfen wird, bis keine wesentliche Volumenschrumpfung mehr auftritt.

2. Verfahren nach Anspruch 1, weiter
**dadurch gekennzeichnet, daß**
als Formiergasgemisch ein Inertgas/Wasserstoff-Gemisch mit einem Wasserstoffanteil von höchstens etwa 10% verwendet wird.

3. Verfahren nach Anspruch 1 oder 2, weiter
**dadurch gekennzeichnet, daß**
als Deaktiviergasgemisch ein Inertgas/Sauerstoff-Gemisch mit einem Sauerstoffanteil von höchstens etwa 10% verwendet wird.

4. Verfahren nach einem der Ansprüche 1 bis 3, weiter
**dadurch gekennzeichnet, daß**
der Formierungsschritt bei einer Temperatur zwischen etwa 100°C und etwa 500°C durchgeführt wird.

5. Verfahren nach einem der Ansprüche 1 bis 4, weiter
**dadurch gekennzeichnet, daß**
der Deaktivierungsschritt bei einer Temperatur zwischen etwa 0°C und etwa 500°C durchgeführt wird.

6. Verfahren nach einem der Ansprüche 1 bis 5, weiter
**dadurch gekennzeichnet, daß**
das Katalysatormaterial vor dem Einbringen in den Reaktor mehrmals dem Zyklus von Formierungsschritt und nachfolgendem Deaktivierungsschritt unterworfen wird.

## Claims

1. A method for the pretreatment of a catalyst material which, at the commencement of use, is subject to a shrinkage of volume, for catalysing a chemical reaction, particularly a methanol re-forming reaction, in an appropriate reactor, **characterised in that** prior to being introduced into the reactor, the catalyst material is subjected to a treatment cycle consisting of a forming stage in which it is exposed to a hydrogen-containing forming gas mixture, and a subsequent deactivation stage in which it is exposed to an oxygen-containing deactivating gas mixture, until such time as no substantial volumetric shrinkage occurs.

2. A method according to claim 1, further **characterised in that** an inert gas/hydrogen mixture with a hydrogen fraction of not more than about 10% is used as the forming gas mixture.

3. A method according to claim 1 or 2, further **characterised in that** an inert gas/oxygen mixture with an oxygen fraction of not more than about 10% is used as the deactivating gas mixture.

4. A method according to one of claims 1 to 3, further **characterised in that** the forming stage is carried out at a temperature of between about 100°C and about 500°C.

5. A method according to one of claims 1 to 4, further **characterised in that** the deactivation stage is carried out at a temperature of between about 0°C and about 5°C.

6. A method according to one of claims 1 to 5, further **characterised in that** prior to being introduced into the reactor, the catalyst material is repeatedly subjected to the cycle of forming stage and subsequent deactivation stage.

## Revendications

1. Procédé pour le prétraitement d'un matériau de catalyseur soumis à un retrait du volume au début de l'utilisation, destiné à la catalyse d'une réaction chimique, en particulier une réaction de réformage de méthanol, dans un réacteur correspondant, **caractérisé en ce que** le matériau de catalyseur est soumis, avant l'introduction dans le réacteur plusieurs fois à un cycle de traitement constitué d'une étape d'activation dans laquelle il est exposé à un mélange gazeux d'activation contenant de l'hydrogène, et d'une étape de désactivation subséquente, dans laquelle il est exposé à un mélange gazeux de désactivation contenant de l'oxygène jusqu'à ce que n'apparaisse plus de retrait substantiel du volume.

2. Procédé selon la revendication 1, **caractérisé en outre en ce que** l'on utilise comme mélange gazeux d'activation un mélange de gaz inerte/hydrogène avec une part en hydrogène d'au plus environ 10 %.

3. Procédé selon la revendication 1 ou 2, **caractérisé en outre en ce que** l'on utilise comme mélange gazeux de désactivation un mélange de gaz inerte/oxygène avec une part en oxygène d'au plus environ 10 %.

4. Procédé selon l'une quelconque des revendications 1 à 3, **caractérisé en outre en ce que** l'on réalise l'étape d'activation à une température comprise entre environ 100°C et environ 500°C.

5. Procédé selon l'une quelconque des revendications 1 à 4, **caractérisé en outre en ce que** l'on réalise l'étape de désactivation à une température comprise entre environ 0°C et environ 500°C.

6. Procédé selon l'une quelconque des revendications 1 à 5, **caractérisé en outre en ce que** le matériau de catalyseur est soumis avant l'introduction dans le réacteur plusieurs fois au cycle constitué de l'étape d'activation et de l'étape de désactivation subséquente.
